# FASCICULE DE BREVET EUROPEEN

(11) **EP 2 791 638 B1**
(45) Date de publication et mention de la délivrance du brevet: **13.02.2019**
(21) Numéro de dépôt: 12816706.1
(22) Date de dépôt: 11.12.2012
(51) Int. Cl.: G01K 7/24

(54) **PROCEDE DE MESURE DE LA TEMPERATURE**
TEMPERATURMESSVERFAHREN
TEMPERATURE MEASUREMENT METHOD

(30) Priorité: 15.12.2011 FR 1161687
(43) Date de publication de la demande: 22.10.2014
(73) Titulaire: Valeo Systèmes de Contrôle Moteur, 95800 Cergy (FR)
(72) Inventeur: BENDANI, Larbi, F-60110 Meru (FR); ASKEUR, Mimoun, F-95490 Vaureal (FR)
(74) Mandataire: Argyma
(86) Numéro de dépôt international: PCT/FR2012/052878
(87) Numéro de publication internationale: WO 2013/088057

(56) Documents cités:
- DE-A1- 3 915 835
- GB-A- 1 507 268
- US-A- 3 940 987
- US-A- 4 198 676

## Description

La présente invention concerne la mesure de la température à l'aide d'un capteur disposé dans un environnement haute tension. Le document US 3 940 987 A décrit un exemple de capteur de température dans un environnement haute tension. Les documents DE 39 15 835 A1, US 4 198 676 A et GB 1 507 268 A décrivent des exemples de capteur de température et leur chaîne de mesure associée.

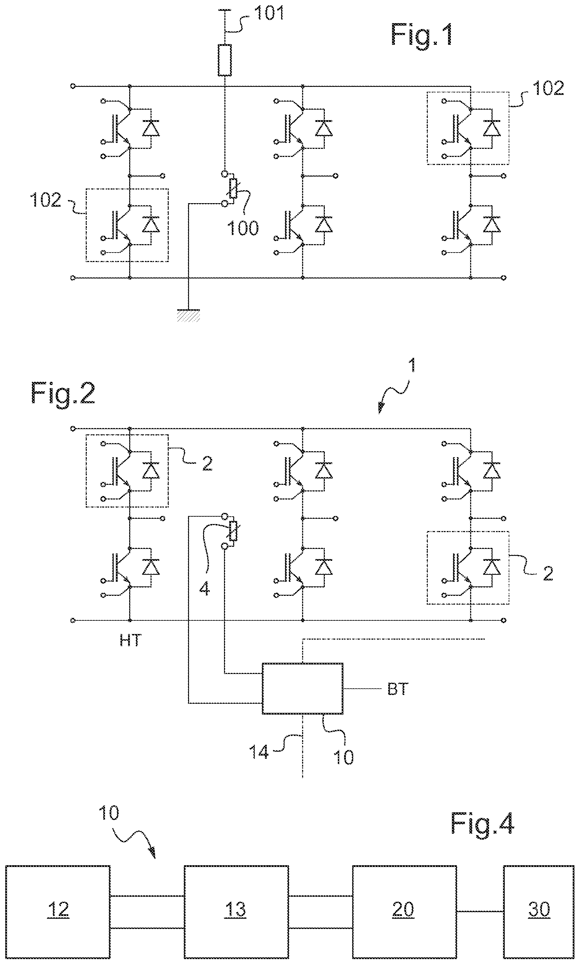

Le capteur est par exemple situé sur une carte électronique portant des composants de puissance. Ces composants de puissance font par exemple partie d'un onduleur, comme représenté sur la figure 1.

Sur cette figure 1, on peut voir le capteur 100 qui est ici une thermistance à coefficient de température négatif (encore appelée CTN en anglais) est alimentée par une source de tension 101 délivrant une basse tension, par exemple de l'ordre de 5V. Ce capteur 100 est disposé sur le même substrat que les cellules de commutation 102 de l'onduleur de puissance, chacune de ces cellules 102 étant par exemple dimensionnée pour supporter des tensions de 430V et des courants d'une valeur maximale de 350A. L'isolation entre le circuit haute tension de l'onduleur et le circuit basse tension du capteur 100 est assurée au moyen d'un gel en silicone recouvrant le substrat. Cette isolation résiste à des tensions de l'ordre de 1,5kV. Néanmoins, l'isolation électrique fournie par le gel n'est pas suffisante si une tension supérieure est appliquée entre le circuit haute tension et le circuit basse tension, ce qui peut se produire en cas d'incident dans le circuit haute tension.

Pour protéger le capteur 100, il peut alors être nécessaire d'ajouter une ou plusieurs barrières isolantes supplémentaires, ce qui peut être coûteux en espace et en argent.

Il existe un besoin pour effectuer une mesure de température isolée dans un environnement haute tension en protégeant le capteur de tout incident dans le circuit haute tension.

L'invention a pour objet de répondre à ce besoin et elle y parvient, selon l'un de ses aspects, à l'aide d'un procédé de mesure de la température d'au moins un composant électronique, notamment un composant appartenant à un circuit haute tension et alimenté en haute tension, avec un capteur, notamment alimenté en basse tension, et délivrant une tension fonction de ladite température, procédé dans lequel :
- on fait traverser à un signal représentatif de la tension aux bornes du capteur un amplificateur différentiel isolé, et
- on détermine à l'aide du signal en sortie de cet amplificateur différentiel isolé la température du composant électronique.

Selon le procédé ci-dessus, on utilise l'isolation galvanique de l'amplificateur différentiel isolé pour protéger le capteur de température. L'amplificateur différentiel est dit « isolé » du fait de cette isolation galvanique.

Le procédé ci-dessus peut utiliser un circuit de mesure dont la partie en amont de l'entrée de l'amplificateur différentiel isolé est dans un environnement haute tension et dont la partie en aval de la sortie de l'amplificateur différentiel isolé est dans un environnement basse tension. L'isolation galvanique permet ainsi d'isoler ces deux parties du circuit de mesure. L'isolation de l'amplificateur différentiel peut être de type capacitif. En variante, il peut s'agir d'une isolation de type inductif.

L'amplificateur différentiel peut remplir d'autres fonctions, par exemple amener la valeur de la tension issue du capteur de température dans une plage de valeurs acceptable pour un étage de traitement numérique, par exemple amener la tension en entrée de cet étage de traitement à une valeur comprise entre 0 et 5V, de sorte que l'on évite de rajouter un composant dédié à la réalisation de l'isolation galvanique. L'invention permet ainsi de diminuer l'encombrement et le coût associés à la réalisation de l'isolation galvanique en utilisant au mieux les composants déjà présents.

L'isolation fournie par l'amplificateur différentiel isolé peut permettre de supporter une tension de 4kV crête. Cette isolation peut être évaluée selon le standard UL1577 ou IEC60747-5-2

Le circuit haute tension est par exemple alimenté par une source de tension délivrant une tension comprise entre 0 et 430V, étant notamment de l'ordre de 430V.

Le capteur de température est notamment alimenté depuis une tension comprise entre 4,5V et 5,5V, étant notamment de l'ordre de 5V, cette tension étant isolée de l'environnement haute tension.

Le procédé comporte une étape consistant à obtenir une relation linéaire entre la tension aux bornes du capteur et la température qu'il mesure. Cette étape est mise en oeuvre par un étage de linéarisation en amont de l'entrée de l'amplificateur différentiel isolé. L'étage de linéarisation peut comprendre un pont de résistance monté entre la masse et la source de tension du capteur de température. Une telle structure peut permettre d'obtenir pour l'amplificateur différentiel isolé une tension différentielle.

Lorsque le capteur de température présente une résistance variant de manière exponentielle en fonction de la température, comme c'est le cas pour une thermistance à coefficient de température négative, la valeur de tension qu'il délivre peut être difficilement exploitable. L'étape de linéarisation permet de rendre les mesures plus exploitables.

L'étage de linéarisation peut comprendre une résistance aux bornes du capteur de température ayant une valeur égale à la valeur de la résistance du capteur de température lorsque la température est de 50°C.

Du fait de la linéarisation, il n'est pas nécessaire d'utiliser un amplificateur différentiel isolé admettant une plage de tension d'entrée trop importante.

La linéarisation peut encore permettre que l'on puisse mesurer la température lorsque le capteur est alimenté par des courants très faibles. Pour obtenir une relation linéaire, y compris pour de basses températures, typiquement de l'ordre de -30°C, on peut imposer à la résistance aux bornes du capteur de température la valeur de la résistance du capteur de température pour ces basses températures, typiquement -30°C.

Le signal en sortie de l'étage de linéarisation est par exemple une tension de l'ordre de quelques mV, allant par exemple jusqu à 5mv.

En variante, le procédé peut être dépourvu de cette étape de linéarisation.

Le signal en sortie de l'amplificateur différentiel isolé peut être reçu en entrée d'un comparateur référencé à la masse.

Le signal en sortie du comparateur peut être reçu en entrée d'un étage de traitement permettant de déterminer la température mesurée par le capteur. Cet étage de traitement peut comprendre un convertisseur analogique/numérique et une unité de traitement numérique. L'unité de traitement numérique comprend notamment au moins un microcontrôleur ou au moins un microprocesseur.

L'amplificateur différentiel isolé peut comprendre un système limitant le courant en entrée dudit amplificateur et un système limitant le courant en sortie dudit amplificateur. On peut ainsi réduire les risques d'endommagement de l'isolation en cas de courants trop importants en entrée ou en sortie de l'amplificateur différentiel isolé, ces valeurs de courant trop élevées pouvant entraîner des dissipations de chaleur importantes dans des résistances qui peuvent affecter l'isolation.

Le capteur et l'amplificateur différentiel isolé peuvent être implantés sur une même carte électronique.

La carte électronique peut comprendre en outre le ou les composants électroniques dont on cherche à mesurer la température. Ces composants électroniques ont notamment chacun une puissance nominale supérieure ou égale à 1 kW. Il s'agit par exemple de cellules de commutation d'un onduleur. Ces cellules de commutation peuvent comprendre un transistor de puissance en parallèle duquel est montée une diode. L'onduleur peut faire partie d'un circuit onduleur/chargeur comprenant en outre un moteur électrique et une batterie, ce circuit étant intégré à un véhicule électrique ou hybride.

L'invention a encore pour objet, selon un autre de ses aspects, un circuit de mesure de la température à partir de la tension délivrée par un capteur de température, le circuit comprenant :
- un amplificateur différentiel isolé, recevant en entrée une tension représentative de la température mesurée par le capteur, et
- un étage de traitement configuré pour déterminer la température mesurée en fonction du signal en sortie de l'amplificateur différentiel isolé,
l'amplificateur différentiel isolé réalisant une isolation galvanique entre son entrée et sa sortie.

L'invention a encore pour objet, selon un autre de ses aspects, un système comprenant :
- le circuit ci-dessus, et
- un capteur de température.

L'invention pourra être mieux comprise à la lecture de la description qui va suivre d'un exemple non limitatif de mise en oeuvre de celle-ci et à l'examen du dessin annexé sur lequel :
- la figure 1 représente une carte électronique sur laquelle une mesure de température selon l'art antérieur est effectuée,
- la figure 2 représente une carte électronique sur laquelle une mesure de température selon un exemple de mise en oeuvre de l'invention est effectuée,
- la figure 3 représente en détail le capteur de température et des composants dont il mesure la température,
- la figure 4 représente sous forme de blocs fonctionnels un circuit de mesure selon un exemple de mise en oeuvre de l'invention,
- les figures 5 et 6 représentent de façon structurelle différents blocs du circuit de la figure 4 et,
- la figure 7 est une courbe montrant la relation entre la température et la tension aux bornes du capteur après linéarisation.

On a représenté à la figure 2 un ensemble 1 au sein duquel peut être mis en oeuvre le procédé selon un exemple de réalisation de l'invention. Cet ensemble 1 comprend un onduleur comprenant une pluralité de cellules de commutation 2. Chaque cellule de commutation 2 est dans l'exemple considéré formée par l'association en parallèle d'un transistor, par exemple un transistor à effet de champ, et d'une diode. Chaque transistor est dans l'exemple décrit un transistor MOS. L'onduleur représenté sur la figure 2 comprend trois bras ayant chacun deux cellules de commutation 2.

Chaque cellule 2 est par exemple configurée pour supporter un courant de l'ordre d'une dizaine d'Ampères, notamment jusqu'à 350A, et une tension à ses bornes de quelques centaines de Volts, par exemple 430V. L'onduleur appartient dans l'exemple considéré à un circuit haute tension.

Comme on peut le voir, un capteur de température 4 est disposé au niveau de l'onduleur, entre deux bras de ce dernier. Le capteur de température 4 est ici une thermistance à coefficient de température négatif (CTN en anglais). Ce capteur 4 est alimenté par une source de tension délivrant une tension de l'ordre de 4,5V à 5,5V, soit une basse tension, à travers un circuit de mesure 10 qui sera décrit ultérieurement. Le circuit 10 permet d'alimenter le capteur 4 en basse tension de façon isolée par rapport à la haute tension de l'onduleur.

Le capteur 4 est configuré pour mesurer la température de l'une au moins des cellules de commutation 2.

Le capteur 4 et l'onduleur sont, dans l'exemple considéré, portés par un même support, tel qu'une carte électronique 5.

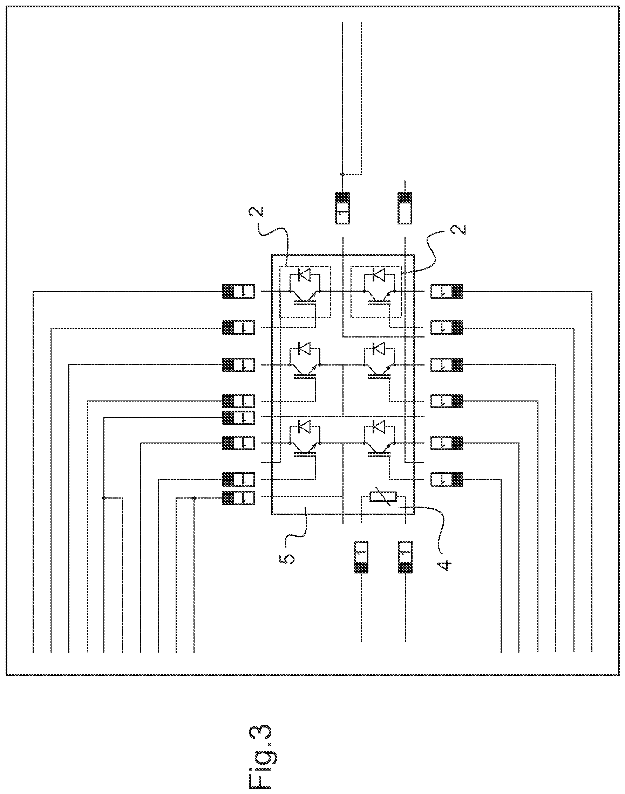

La tension mesurée aux bornes du capteur 4 est, comme représenté sur la figure 3, reçue en entrée du circuit 10.

Le circuit 10 est représenté de manière fonctionnelle sur la figure 4, les différentes fonctions ayant la forme de blocs pouvant correspondre à des étapes du procédé selon l'invention.

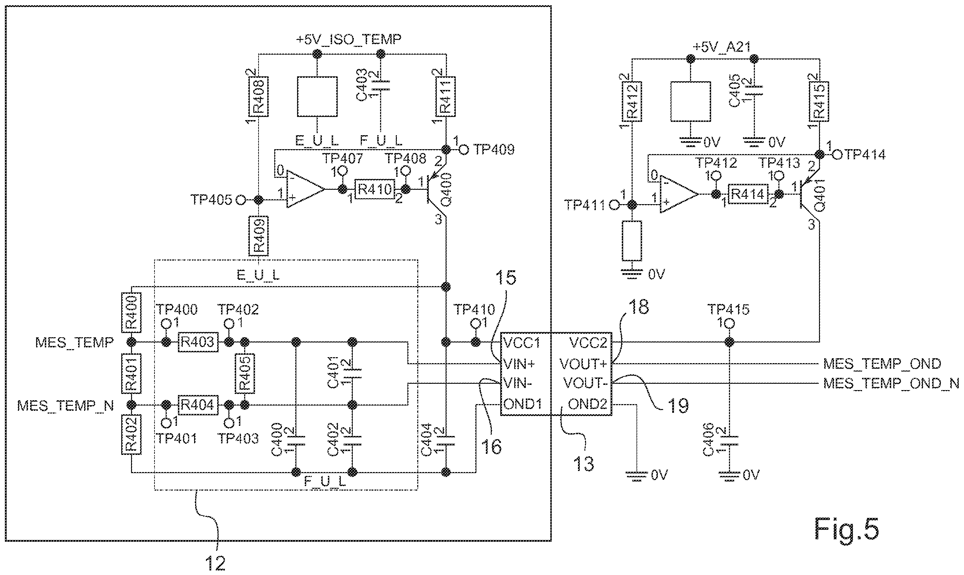

Le circuit 10 comprend un étage de linéarisation 12 représenté en détail sur la figure 5. Cet étage 12 est configuré pour établir une relation linéaire entre la tension délivrée par le capteur 4 et la température de la ou des cellules 2. L'étage 12 se comporte par exemple comme un atténuateur de tension d'un rapport choisi pour que la tension en entrée de l'étage 13 qui sera décrit ultérieurement soit compatible avec le fonctionnement de cet étage 13. L'étage 12 comprend par exemple un pont de résistances montées entre la masse et l'alimentation du capteur 4.

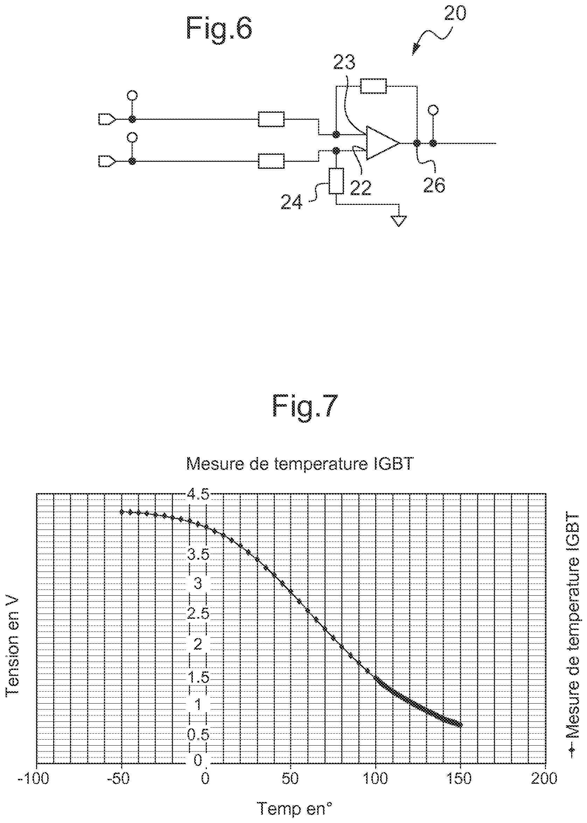

Une résistance montée en parallèle du capteur 4 peut avoir une valeur sensiblement constante égale à la valeur de la résistance du capteur 4 lorsque la température est de 50°C environ. Une relation linéaire entre la tension aux bornes du capteur 4 et la température peut ainsi être obtenue sur une plage de température comprise notamment entre 50°C et 125°C. La valeur de résistance globale pour le pont de résistances peut être calculée en fixant à froid une valeur à froid, par exemple à -30°C, proche de 250mV et une valeur à chaud, par exemple à 125°C, proche de 5mV, ces valeurs de tension étant vues de l'étage 13.On a représenté sur la figure 7 la relation entre la tension en sortie de l'étage de linéarisation 12 et la température mesurée par le capteur 4.

Comme on peut le voir, on obtient une relation sensiblement linéaire sur une large plage de température, notamment pour des températures comprises entre 50°C et 120°C.

En sortie de l'étage de linéarisation 12, le signal est reçu en entrée d'un étage 13 ayant pour fonction d'isoler galvaniquement le capteur 4 et la portion du circuit 10 en amont de l'entrée de l'étage 13 du reste du circuit 10. Cet étage 13 est, dans l'exemple considéré, constitué par un amplificateur différentiel isolé.

Le signal en sortie de l'étage de linéarisation est alors reçu entre deux bornes d'entrée 15 et 16 de l'amplificateur différentiel isolé. L'isolation galvanique 14, par exemple de type capacitif ou inductif, fournie par cet amplificateur différentiel est utilisée pour réaliser une mesure de température isolée. L'amplificateur différentiel isolé est par exemple commercialisé par la société Texas Instrument^{R} sous la référence AMC1200.

Dans cet exemple, l'isolation galvanique 14 provient d'une barrière en dioxyde de silicone disposée entre l'entrée et la sortie de l'amplificateur différentiel. Le signal quitte l'amplificateur différentiel isolé entre la borne de sortie non inverseuse 18 et la borne de sortie inverseuse 19 de cet amplificateur.

Le signal attaque ensuite un étage 20 de comparaison représenté sur la figure 6. Cet étage 20 comprend dans l'exemple considéré un amplificateur opérationnel. La borne de sortie non inverseuse 18 de l'amplificateur différentiel est par exemple reliée, directement ou via un composant intermédiaire tel qu'une résistance, à la borne d'entrée non inverseuse 22 de l'amplificateur opérationnel. Cette borne 22 est dans l'exemple représenté également reliée à la masse via une résistance 24. Toujours dans l'exemple de la figure 6, la borne de sortie inverseuse 19 de l'étage 13 est reliée via une résistance à la borne de sortie inverseuse 23 de l'amplificateur opérationnel.

L'étage 20 permet notamment de référencer à la masse le signal provenant du capteur 4.La sortie de l'étage 20 est formée par la borne de sortie 26 de l'amplificateur opérationnel.

Le signal en sortie de l'étage 20 attaque ensuite un étage de traitement 30 permettant de déterminer la température mesurée par le capteur 4. Cet étage 30 comprend par exemple un convertisseur analogique/numérique et un microcontrôleur ou un microprocesseur L'invention n'est pas limitée aux exemples qui viennent d'être décrits.

Le circuit 10 peut en particulier ne pas comprendre tous les étages représentés sur la figure 4, dès lors qu'il comprend l'étage 13 permettant d'isoler la partie du circuit 10 en amont de l'étage 13 de la partie du circuit 10 en aval de cet étage 13.

L'expression « comportant un » doit être comprise comme signifiant « comportant au moins un », sauf lorsque le contraire est spécifié.

## Revendications

1. Procédé de mesure de la température d'au moins un composant électronique (2) à l'aide d'un capteur (4) délivrant une tension fonction de ladite température, procédé dans lequel :
- on fait traverser à un signal représentatif de la tension délivrée par le capteur (4) un amplificateur différentiel isolé (13), l'amplificateur différentiel isolé (13) présentant une isolation galvanique (14) traversée par ledit signal, et
- on détermine à l'aide du signal en sortie de cet amplificateur différentiel isolé (13) la température du composant électronique (2),
ledit procédé comprenant par ailleurs une étape (12) consistant à obtenir une relation linéaire entre la tension délivrée par le capteur (4) et la température du composant électronique (2), ladite étape (12) correspondant à une atténuation, par un rapport prédéfini, de ladite tension délivrée à l'amplificateur différentiel isolé (13).

2. Procédé selon la revendication 1, dans lequel le signal en sortie de l'amplificateur différentiel isolé (13) est reçu en entrée d'un comparateur (20) référencé à une masse.

3. Procédé selon la revendication 2, dans lequel le signal en sortie du comparateur est reçu en entrée d'un étage de traitement (30).

4. Procédé selon la revendication 3, dans lequel l'étage de traitement (30) comprend un convertisseur analogique/numérique et une unité de traitement numérique.

5. Procédé selon l'une quelconque des revendications précédentes, dans lequel l'isolation galvanique fournie par l'amplificateur différentiel isolé (13) est de type capacitif ou inductif.

6. Procédé selon la revendication précédente, dans lequel le capteur (4) et l'amplificateur différentiel isolé (13) sont implantés sur une même carte électronique (5).

7. Procédé selon l'une quelconque des revendications précédentes, la carte électronique (5) comprenant en outre le ou les composants électroniques (2) dont on mesure la température, chacun desdits composants (2) ayant notamment une puissance nominale supérieure ou égale à 1 kW.

8. Procédé selon l'une quelconque des revendications précédentes, dans lequel on utilise pour déterminer la température du composant électronique (2) un circuit de mesure (10) dont la partie (12) en amont de l'entrée de l'amplificateur différentiel isolé (13) est dans un environnement haute tension et dont la partie (20, 30) en aval de la sortie de l'amplificateur différentiel isolé (13) est dans un environnement basse tension.

9. Circuit (10) de mesure de la température à partir de la tension délivrée par un capteur de température (4), le circuit comprenant :
- un amplificateur différentiel isolé (13), recevant en entrée une tension représentative de la température mesurée par le capteur (4),
- un atténuateur de tension (12) configuré pour délivrer en entrée de l'amplificateur différentiel isolé (13) une tension atténuée par un rapport prédéfini, ladite tension étant représentative de la température mesurée au moyen du capteur (4), et
- un étage de traitement (30) configuré pour déterminer la température mesurée en fonction du signal en sortie de l'amplificateur différentiel isolé (13),
l'amplificateur différentiel isolé (13) présentant une isolation galvanique entre son entrée et sa sortie.

10. Système, comprenant :
- le circuit (10) selon la revendication 9, et
- un capteur de température (4).

## Patentansprüche

1. Temperaturmessverfahren mindestens eines elektronischen Bauteils (2) mit Hilfe eines Sensors (4), der eine Spannung in Abhängigkeit von der Temperatur bereitstellt, wobei bei dem Verfahren:
- ein Signal, das für die von dem Sensor (4) bereitgestellte Spannung repräsentativ ist, durch einen isolierten Differentialverstärker (13) geschickt wird, wobei der isolierte Differentialverstärker (13) eine galvanische Isolierung (14) aufweist, die von dem Signal durchquert wird, und
- mit Hilfe des Signals am Ausgang dieses isolierten Differentialverstärkers (13) die Temperatur des elektronischen Bauteils (2) bestimmt wird,
wobei das Verfahren ferner einen Schritt (12) umfasst, der darin besteht, eine lineare Beziehung zwischen der von dem Sensor (4) bereitgestellten Spannung und der Temperatur des elektronischen Bauteils (2) zu erhalten, wobei der Schritt (12) einer Abschwächung, durch ein vorher festgelegtes Verhältnis, der dem isolierten Differentialverstärker (13) bereitgestellten Spannung entspricht.

2. Verfahren nach Anspruch 1, wobei das Signal am Ausgang des isolierten Differentialverstärkers (13) am Eingang eines auf eine Masse referenzierten Komparators (20) empfangen wird.

3. Verfahren nach Anspruch 2, wobei das Signal am Ausgang des Komparators am Eingang einer Verarbeitungsstufe (30) empfangen wird.

4. Verfahren nach Anspruch 3, wobei die Verarbeitungsstufe (30) einen Analog-Digital-Konverter und eine digitale Verarbeitungseinheit umfasst.

5. Verfahren nach einem der vorangehenden Ansprüche, wobei die von dem isolierten Differentialverstärker (13) bereitgestellte galvanische Isolierung vom kapazitiven oder induktiven Typ ist.

6. Verfahren nach vorangehendem Anspruch, wobei der Sensor (4) und der isolierte Differentialverstärker (13) auf derselben Leiterplatte (5) angebracht sind.

7. Verfahren nach einem der vorangehenden Ansprüche, wobei die Leiterplatte (5) ferner das oder die elektronischen Bauteile (2) umfasst, deren Temperatur gemessen wird, wobei jedes der Bauteile (2) insbesondere eine nominale Leistung von über oder gleich 1 kW hat.

8. Verfahren nach einem der vorangehenden Ansprüche, wobei zum Bestimmen der Temperatur des elektronischen Bauteils (2) ein Messkreis (10) verwendet wird, dessen dem Eingang des isolierten Differentialverstärkers (13) vorgelagerter Teil (12) in einem Hochspannungsumfeld ist und dessen dem Ausgang des isolierten Differentialverstärkers (13) nachgelagerter Teil (20, 30) in einem Niederspannungsumfeld ist.

9. Messkreis (10) der Temperatur auf der Basis der von einem Temperatursensor (4) bereitgestellten Spannung, wobei der Kreis umfasst:
- einen isolierten Differentialverstärker (13), der am Eingang eine Spannung empfängt, die für die von dem Sensor (4) gemessene Temperatur repräsentativ ist,
- einen Spannungsabschwächer (12), der konfiguriert ist, um am Eingang des isolierten Differentialverstärkers (13) eine durch ein vorher festgelegtes Verhältnis abgeschwächte Spannung bereitzustellen, wobei die Spannung für die mittels des Sensors (4) gemessene Temperatur repräsentativ ist, und
- eine Verarbeitungsstufe (30), die konfiguriert ist, um die in Abhängigkeit vom Signal am Ausgang des isolierten Differentialverstärkers (13) gemessene Temperatur zu bestimmen,
wobei der isolierte Differentialverstärker (13) zwischen seinem Eingang und seinem Ausgang eine galvanische Isolierung aufweist.

10. System, umfassend:
- den Kreis (10) nach Anspruch 9 und
- einen Temperatursensor (4).

## Claims

1. Method for measuring the temperature of at least one electronic component (2) using a sensor (4) delivering a voltage according to said temperature, method wherein:
- a differential insulated amplifier (13) is passed through a signal representative of the voltage delivered by the sensor (4), the differential insulated amplifier (13) having a galvanic insulation (14) passed through by said signal, and
- using the output signal of this differential insulated amplifier (13), the temperature of the electronic component (2) is determined,
said method moreover comprising a step (12) consisting of obtaining a linear relationship between the voltage delivered by the sensor (4) and the temperature of the electronic component (2), said step (12) corresponding to a reduction, by a predefined ratio, of said voltage delivered to the differential insulated amplifier (13).

2. Method according to claim 1, wherein the output signal of the differential insulated amplifier (13) is received at the input of a comparator (20) referenced to a mass.

3. Method according to claim 2, wherein the output signal of the comparator is received at the input of a processing stage (30).

4. Method according to claim 3, wherein the processing stage (30) comprises an analogue/digital converter and a digital processing unit.

5. Method according to any one of the preceding claims, wherein the galvanic insulation provided by the differential insulated amplifier (13) is of the capacitive or inductive type.

6. Method according to the preceding claim, wherein the sensor (4) and the differential insulated amplifier (13) are implanted on one same electronic board (5).

7. Method according to any one of the preceding claims, the electronic board (5) further comprising the electronic component(s) (2) of which the temperature is measured, each of said components (2) having in particular a nominal power greater than or equal to 1 kW.

8. Method according to any one of the preceding claims, wherein a measuring circuit (10) is used to determine the temperature of the electronic component (2), of which the upstream part (12) of the input of the differential insulated amplifier (13) is in a high voltage environment and of which the downstream part (20, 30) of the output of the differential insulated amplifier (13) is in a low voltage environment.

9. Circuit (10) for measuring the temperature from the voltage delivered by a temperature sensor (4), the circuit comprising:
- a differential insulated amplifier (13), receiving at the input, a voltage representative of the temperature measured by the sensor (4),
- a voltage attenuator (12) configured to deliver at the input of the differential insulated amplifier (13), a voltage reduced by a predefined ratio, said voltage being representative of the temperature measured by means of the sensor (4), and
- a processing stage (30) configured to determine the temperature measured according to the output signal of the differential insulated amplifier (13),
the differential insulated amplifier (13) having a galvanic insulation between the input thereof and the output thereof.

10. System, comprising:
- the circuit (10) according to claim 9, and
- a temperature sensor (4).
